(19) Europäisches Patentamt / European Patent Office / Office européen des brevets

(11) **EP 4 197 711 A1**

(12) **EUROPEAN PATENT APPLICATION**

(43) Date of publication:
**21.06.2023 Bulletin 2023/25**

(21) Application number: **22209702.4**

(22) Date of filing: **25.11.2022**

(51) International Patent Classification (IPC):
***B25J 9/16*** *(2006.01)*

(52) Cooperative Patent Classification (CPC):
**B25J 9/1676;** G05B 2219/40202

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2021 JP 2021202125**

(71) Applicant: **OMRON Corporation
Kyoto 600-8530 (JP)**

(72) Inventor: **OSHIRO, Atsushi
Kyoto-shi, 600-8530 (JP)**

(74) Representative: **Mewburn Ellis LLP
Aurora Building
Counterslip
Bristol BS1 6BX (GB)**

(54) **COOPERATION SYSTEM**

(57) A cooperation system (1) that allows a robot (200) and one or more operators (400) to work together in cooperation, the cooperation system (1) includes a calculator (10, 101), a generator (12, 112), and a providing unit (53, 501). The calculator (10, 101) calculates a risk value that indicates a risk of interference between a manipulator (202) of the robot (200) and an object (400) around the manipulator (202). The generator (12, 112) generates, depending on the risk value, a command that causes the manipulator (202) to operate so as to avoid the interference between the manipulator (202) and the object (400). The providing unit (53, 501) provides information (70, 71) in which a relationship between the risk value and a position of the manipulator (202) is visualized.

FIG.1

**Description**

BACKGROUND OF THE INVENTION

Field of the Invention

This disclosure relates to a cooperation system.

Description of the Background Art

In the field of FA (Factory Automation), cooperation systems are actively studied and developed in recent years, which allow human and robots to work together in cooperation. Such cooperation systems should desirably be equipped to avoid any interference between human and robots. The published literature, "Multi 3D camera mapping for predictive and reflexive robot manipulator trajectory estimation, Justinas Miseikis, et. al, with three others, 2016 IEEE Symposium Series on Computational Intelligence (SSCI)" describes a technology that enables the trajectory of a robot to change in accordance with a cost that indicates possible interference between the robot and an object.

SUMMARY OF THE INVENTION

According to the technology described in "Multi 3D camera mapping for predictive and reflexive robot manipulator trajectory estimation, Justinas Miseikis, et. al, with three others, 2016 IEEE Symposium Series on Computational Intelligence (SSCI)", the robot trajectory is changed in accordance with possible interference between the robot and an object. Thus, the behavior of an operator may be likely to affect the motion and operation of a robot. Therefore, the operator should be taught how to eliminate or minimize possible impact on the robot operation. The published literature, "Multi 3D camera mapping for predictive and reflexive robot manipulator trajectory estimation, Justinas Miseikis, et. al, with three others, 2016 IEEE Symposium Series on Computational Intelligence (SSCI)", however, fails to describe or even imply any support for training of operators in the cooperation system.

To address the issues of the known art, this disclosure is directed to providing a cooperation system that can offer support for training of who operates the system.

An aspect of this disclosure provides a cooperation system that allows a robot and one or more operators to work together in cooperation, the cooperation system includes a calculator, a generator, and a providing unit. The calculator calculates a risk value that indicates a risk of interference between a manipulator of the robot and an object around the manipulator. The generator generates, depending on the risk value, a command that causes the manipulator to operate so as to avoid the interference between the manipulator and the object. The providing unit provides information in which a relationship between the risk value and a position of the manipulator is visualized.

As disclosed herein, a user, by checking the information thus offered, may be allowed to grasp a relationship between the manipulator position and the risk value possibly affecting the manipulator's operation. Then, the user may be allowed to specify, based on the relationship, a position(s) of the manipulator with a higher risk of interference with the operator. Thus, the user may assume that the operator is too close to the manipulator when the manipulator is located at the specified position(s). Then, the user may advise the operator to review his/her work during a period when the manipulator is at the specified position(s). The cooperation system disclosed herein may be allowed to offer support for training of who operates the system.

In the system disclosed herein, the providing unit may generate the information for each of the one or more operators. This may allow the user to check the risk value for each operator. The user may be then able to identify an operator(s) having a large impact on the manipulator's operation and advise the operator of the involved risk. The user may be able to identify an operator(s) with a less or little impact on the manipulator's operation and advise the other operators of the involved risk using this operator's work, as an exemplary model, for training of the other operators.

In the system disclosed herein, the robot and the one or more operators carry out a plurality of working steps. The providing unit generates the information for each of the plurality of working steps.

This may allow the user to grasp a relationship between the risk value and the manipulator's position for each working step.

The cooperation system disclosed herein further includes a camera configured to image the robot and an area surrounding the robot. The providing unit provides a screen on which a moving image obtained as a result of the imaging by the camera is reproducible.

This may allow the user to check the moving image and thereby readily know a relationship between the operator and the manipulator's position.

In the system disclosed herein, the providing unit provides a screen on which input of a selected one of the plurality of working steps is receivable and the providing unit displays the information relevant to the selected one of the plurality of working steps on the screen.

This may allow the user to grasp a relationship between the risk value and the manipulator's position for any desired one of the working steps.

The cooperation system disclosed herein further includes a camera configured to image the robot and an area surrounding the robot. The providing unit further provides a moving image obtained as a result of the imaging by the camera during the selected one of the plurality of working steps.

This may allow the user to check the moving image of a desired one of the working steps and thereby readily know a relationship between the operator and the manipulator's position in the desired working step.

In the system disclosed herein, the robot is controlled so that the manipulator is allowed to move from a start position to a finish position. The information includes a graph showing changes of the risk value relative to a distance of the manipulator from the start position.

This may allow the user to check the graph and thereby readily know a relationship between the risk value and the manipulator's position.

In the system disclosed herein, the information includes a heat map in which the risk value at each position of the manipulator is expressed in at least one of color or concentration.

This may allow the user to check the heat map and thereby readily know a relationship between the risk value and the manipulator's position.

The foregoing and other objects, features, aspects and advantages of the invention will become more apparent from the following detailed description of the invention when taken in conjunction with the accompanying drawings.

BRIEF DESCRIPTION OF THE DRAWINGS

Fig. 1 is a block diagram illustrating an exemplified cooperation system according to an embodiment of this disclosure.
Fig. 2 is a block diagram illustrating hardware elements of a controller.
Fig. 3 is a view illustrating an example of OctoMap.
Fig. 4 is a graph illustrating an example of the sigmoidal function.
Fig. 5 is a view illustrating a relationship between a vector v and rate vectors $v_{obs}$ and $v_{tcp}$.
Fig. 6 is a graph illustrating an example of directional function $H_{dict}$ of the rate vectors.
Fig. 7 is a view illustrating a group setting method for groups each including a plurality of different operations.
Fig. 8 is a view illustrating exemplified operations included in the groups.
Fig. 9 is a schematic view illustrating exemplified hardware elements of an information providing device according to the embodiment.
Fig. 10 is a block diagram of exemplified functional elements of the information providing device.
Fig. 11 is a diagram illustrating a first management table.
Fig. 12 is a diagram illustrating a second management table.
Fig. 13 is a view illustrating exemplified frames included in a moving image.
Fig. 14 is a diagram illustrating a third management table.
Fig. 15 is a diagram illustrating a fourth management table.
Fig. 16 is a view illustrating a first exemplified screen provided by a providing unit.
Fig. 17 is a view illustrating a second exemplified screen provided by the providing unit.
Fig. 18 is a view illustrating a third exemplified screen provided by the providing unit.

DESCRIPTION OF THE PREFERRED EMBODIMENTS

Embodiments of the technology disclosed herein are hereinafter described referring to the accompanying drawings. The same or similar components and units in the drawings are simply illustrated with the same reference signs, redundant description of which will basically be omitted. Modified embodiments hereinafter described may be suitably selected and combined.

§1 <A. Example of application>

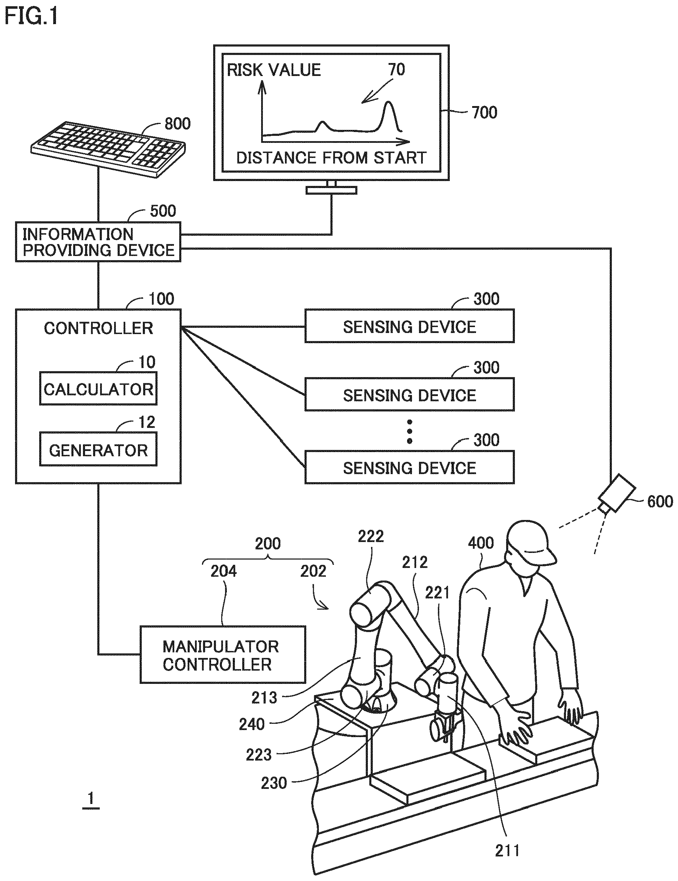

The outline of a cooperation system according to an embodiment of this disclosure is hereinafter described. Fig. 1 is a block diagram illustrating an example of the cooperation system according to the embodiment. As illustrated in Fig. 1, a cooperation system 1 includes a controller 100, a robot 200, a plurality of sensing devices 300, an information providing device 500, a camera 600, a display device 700, and an input device 800.

Cooperation system 1 may be installed and operated in a production site, examples of which include plants and factories. As illustrated in Fig. 1, the production site includes a working step in which an operator 400 and robot 200 work together in cooperation (hereinafter, "cooperative working step"). Cooperation system 1 includes one or more cooperative working steps.

In each cooperative working step, operator 400, when he/she moves, may become an obstacle for robot 200 and interfere with the operation of robot 200. Cooperation system 1 executes a process to avoid any interference of operator 400 with robot 200 in each cooperative working step.

Robot 200 includes a manipulator 202 and a manipulator controller 204.

Manipulator 202 has a plurality of arms (arms, 211, 212, 213), a plurality of joints (joints 221, 222, 223), a rotator 230, and a base 240. Specifically, these components are arranged in manipulator 202 from its edge side, in the following order; arm 211, joint 221, arm 212, joint 222, arm 213, joint 223, rotator 230, and base 240.

An end effector is attached to a front end of arm 211. A rear end of arm 211 is connected to joint 221. Joint 221 is attached to a front end of arm 212. A rear end of arm 212 is connected to joint 222. Joint 222 is attached to a front end of arm 213. A rear end of arm 213 is connected to joint 223.

Joint 221 allows arm 211 to move relative to arm 212. Joint 222 allows arm 212 to move relative to arm 213. Joint 223 allows arm 213 to move relative to rotator 230.

Rotator 230 supports joint 223 and is rotatable around a rotation axis. Base 240 supports rotator 230 in a rotatable manner.

Manipulator controller 204 controls the operation of manipulator 202. Specifically, manipulator controller 204 obtains, from controller 100, a command relating to the target position and rate of movement of a front end of manipulator 202, i.e., front end of arm 211 (hereinafter, "tool center point (TCP)". Manipulator controller 204 controls the operations of joints 221 to 223 and of rotator 230 to cause the tool center point to move in accordance with the obtained command.

Sensing devices 300 are disposed in a space where robot 200 is present to detect the position of any object in this space. The object includes manipulator 202 and operator 400. Sensing device 300 may be, for example, an RGB-D camera or a laser range finder. This device generates point group data of a field of vision. Preferably, four or more sensing devices 300, for example, may be disposed at different positions so that there is no dead angle in a target space.

Controller 100 controls robot 200 so that manipulator 202 is allowed to move from a start position to a finish position. This movement of manipulator 202 from the start position to the finish position (hereinafter, "target movement") is repeatedly carried out for each product to be manufactured. In the case of manufacture of one lot including "N" number of products, robot 200 is controlled by controller 100 to repeat the target movement the "N" number of times.

Cooperation system 1 may include controllers 100 each used for a respective one of one or more cooperative working steps. In this instance, these controllers 100 may each control robot 200 installed and used in a corresponding one of the cooperative working steps. Cooperation system 1 may include one controller 100 shared by two or more cooperative working steps. In this instance, controller 100 controls robot 200 installed and set for each one of the cooperative working steps.

Controller 100 is connected to sensing devices 300 in a manner that mutual communication is allowed. Controller 100 communicates with sensing devices 300 using, for example, GigE Vision (registered trademark) or USB (Universal Serial Bus).

Controller 100 is connected to manipulator controller 204 in a manner that mutual communication is allowed. Controller 100 communicated with manipulator controller 204 using, for example, Ethernet/IP (registered trademark). Controller 100 recognizes the current position of manipulator 202 through communication with manipulator controller 204.

As illustrated in Fig. 1, controller 100 includes a calculator 10 and a generator 12. In case robots 200 provided respectively for the cooperative working steps are targets to be controlled, controller 100 includes a calculator 10 and a generator 12 for each one of robots 200 to be controlled.

Calculator 10 calculates a risk value indicating a risk of interference of manipulator 202 with any object around manipulator 202 (including operator 400) based on results of detection obtained by sensing devices 300. The risk value is a parameter that changes depending on the likelihood of interference of manipulator 202 with any object around manipulator 202.

Depending on the risk value, generator 12 generates a command that causes manipulator 202 to operate so as to avoid possible interference of manipulator 202 with any object. Specifically, generator 12 decides the trajectory of the tool center point from the current position to the finish position in accordance with an operation selected depending on the risk value. Generator 12 specifies the target position and rate of movement of the tool center point for each control cycle based on the decided trajectory. Controller 100, for each control cycle, generates a command relating to the specified target position and rate of movement and outputs the generated command to manipulator controller 204.

For instance, generator 12, whenever the risk value suggests a higher risk than a threshold, changes the trajectory of manipulator 202 to avoid contact with an object(s) and generates a command in response to the changed trajectory. This may allow manipulator 202, during the motion, to avoid contact with operator 400 if operator 400 comes too close to robot 200, preventing any interference with operator 400.

Thus, controller 100 controls robot 200 not to interfere with operator 400, ensuring the safety of operator 400.

This, however, may invite a poor production efficiency of robot 200 in case the trajectory of manipulator 202 has to be changed too often. Therefore, operator 400 may desirably be trained in advance so that the production efficiency of robot 200 is not degraded.

An information providing device 500 provides information for supporting training of operator 400. Information providing device 500 is connected to controller 100 in a manner that mutual communication is allowed. Display device 700 and input device 800 are also connected to information providing device 500. An example of display device 700 is a liquid crystal display. Input device 800 may include, for example, a keyboard, mouse, and/or touch panel.

Information providing device 500 obtains, from controller 100, the risk value indicating a risk of interference of manipulator 202 at a current position with an object(s) nearby for each one of positions of manipulator 202 in operation. Information providing device 500 provides, in response to an input through input device 800, information 70 in which a relationship between the risk value and the position of manipulator 202 is visualized. Typically, information providing device 500 presents, on display device 700, a screen with information 70 displayed thereon.

Camera 600 is used to capture images of robot 200 and of an area around robot 200. In case cooperation system 1 includes a plurality of cooperative working steps, camera 600 is installed and used for each of the cooperative working steps. Camera 600 is connected to information providing device 500 and outputs moving images captured by this camera to information providing device 500. Information providing device 500 may reproduce the moving images obtained from camera 600 on display device 700.

In cooperation system 1 according to this embodiment, a user, by checking information 70 thus offered from information providing device 500, may be allowed to grasp a relationship between the risk value and the position of manipulator 202.

Based on this relationship, the user may be allowed to specify a position(s) of manipulator 202 that involves a higher risk of interference with operator 400. The user may be then able to determine a certain risk of operator 400 coming too close to manipulator 202 when manipulator 202 is located at the specified position(s). Then, the user may advise operator 400 to review his/her work during a period when manipulator 202 is at a specified position(s). Cooperation system 1 thus characterized may offer support for training of who operates the system.

§2 EXAMPLES

<Hardware configuration of controller>

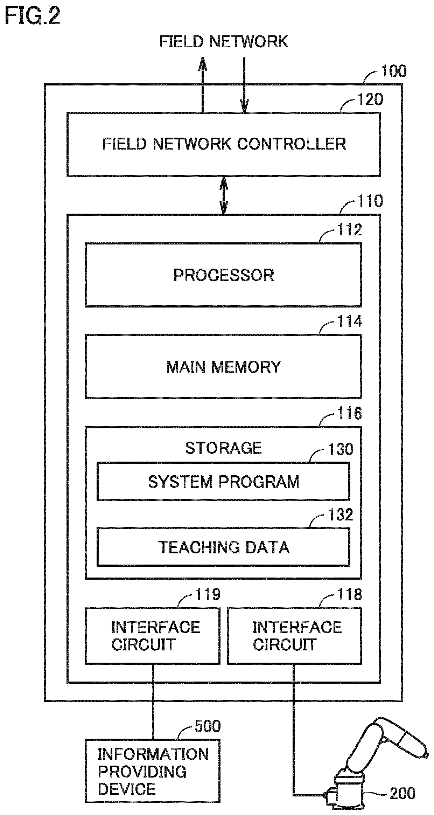

Fig. 2 is a block diagram illustrating hardware elements of the controller. Controller 100 is typically so structured that conforms to a general-purpose computational architecture.

As illustrated in Fig. 2, controller 100 includes a control processing circuit 110 and a field network controller 120.

Control processing circuit 110 executes computing processes required to drive robot 200. In one example, control processing circuit 110 includes a processor 112, a main memory 114, a storage 116 and interface circuits 118 and 119.

Processor 112 executes computing processes to drive robot 200. Main memory 114 may include a volatile storage device, for example, DRAM (Dynamic Random Access Memory) or SRAM (Static Random Access Memory). Storage 116 may include a non-volatile storage device, for example, HDD (Hard Disk Drive) or SSD (Solid State Drive).

In storage 116 is stored a system program 130 to enable the control of robot 200. System program 130 contains commands for execution of computing processes associated with operations of robot 200 and commands associated with interfaces with robot 200. Calculator 10 and generator 12 illustrated in Fig. 1 are implemented by causing processor 112 to run system program 130.

Teaching data 132 is data relating to a predefined trajectory of the tool center point of manipulator 202.

Interface circuit 118 transmits and receives data to and from robot 200. Interface circuit 119 transmits and receives data to and from information providing device 500.

Field network controller 120 mostly transmits and receives data to and from sensing devices 300 through a field network.

<Processing details of calculator>

Calculator 10 calculates, at regular intervals, the risk value indicating a risk of interference of manipulator 202 with an object(s). An exemplified calculation method for the risk value is hereinafter described. The method of risk value calculation by calculator 10, however, is not necessarily limited to the example described below. As the method of risk value calculation by calculator 10 may be employed the technology described in "Multi 3D camera mapping for predictive and reflexive robot manipulator trajectory estimation, Justinas Miseikis, et. al, with three others, 2016 IEEE Symposium Series on Computational Intelligence (SSCI)".

Calculator 10 obtains, for each cycle, point group data from sensing devices 300. The point group data obtained from each sensing device 300 is expressed in a coordinate system of the relevant sensing device 300 (hereinafter, "camera coordinate system"). Calculator 10 converts the point group data obtained from each sensing device 300 thus expressed in the camera coordinate system into a coordinate system of robot 200 (hereinafter, "robot coordinate system"). The conversion matrix for conversion from the camera coordinate system into the robot coordinate system is drawn up by calibration performed in advance for each sensing device 300.

Using all of the obtained point group data may impose a heavy computing load. Calculator 10, therefore, generates OctoMap from the point group data.

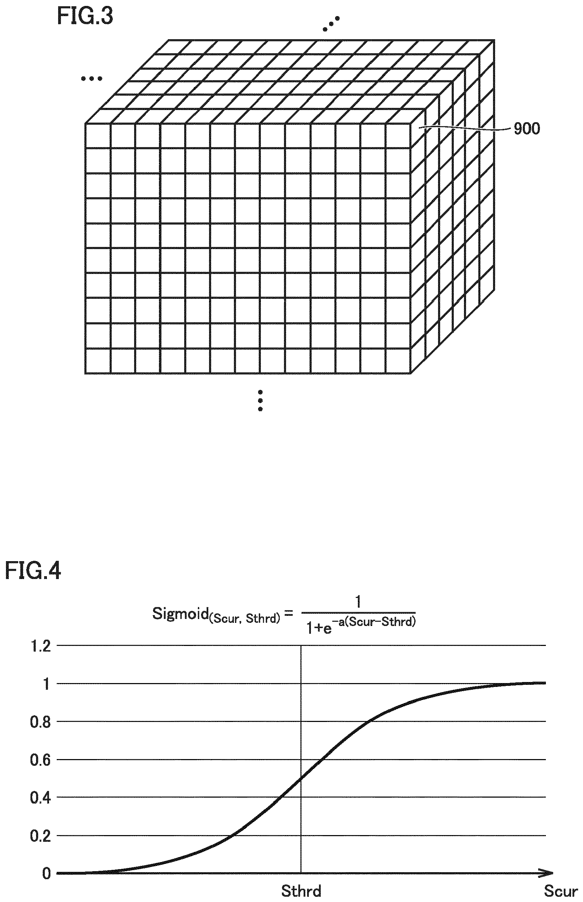

Fig. 3 is a view illustrating an example of the OctoMap. As illustrated in Fig. 3, the OctoMap represents the occupancy of an object in each one of a plurality of three-dimensional, cuboidal voxels 900 which are obtained by dividing a space into sections. Examples of the object may include, as well as manipulator 202 and operator 400, any obstacle accidentally placed around manipulator 202. Calculator 10 adopts voxels 900 into the point group data and calculates the occupancy for each voxel 900. The occupancy is expressed with, for example, values from 0.00 to 100. As the OctoMap generating method using the point group data may be employed the technology described in "Multi 3D camera mapping for predictive and reflexive robot manipulator trajectory estimation, Justinas Miseikis, et. al, with three others, 2016 IEEE Symposium Series on Computational Intelligence (SSCI)". Thus, calculator 10 is allowed to generate the OctoMap for each cycle.

Controller 100 recognizes the current position of manipulator 202 through communication with manipulator controller 204. Thus, calculator 10 may delete, from the OctoMap, a voxel at which manipulator 202 is currently located. This may lessen a computing load imposed by using the OctoMap, which will be described later.

In accordance with the following Formula (1), calculator 10 calculates a risk value, "$I_{risk}$", which indicates a risk of interference of manipulator 202 with an object (mostly, operator 400) in each cycle.

[Mathematical Formula 1]

$$I_{risk} = H_{dict} \frac{|v_{obs}|^2}{D_{eucl}} \left(1 + Sigmoid_{(S_{cur}, S_{thrd,})}\right) + P_{scoli} + P_{bias} \qquad \text{Formula (1)}$$

In this Formula (1), $H_{dict}$ is the directional function of rate vectors of manipulator 202 and of operator 400. $v_{obs}$ is the rate vector of operator 400. $D_{eucl}$ is a distance between operator 400 and the tool center point of manipulator 202. Sigmoid ($S_{cur}$, $S_{thrd}$) is the sigmoidal function. $S_{cur}$ is a length along the trajectory from the start position to the current position of the tool center point. $S_{thrd}$ is a threshold that can be defined in advance, which is a dimension by 0.6 to 0.7 times of a length along the trajectory from the start position to the finish position. $P_{scoil}$ is a circumventing operation term associated with a static obstacle. $P_{bias}$ is a normality bias term reciting a negative constant that be defined in advance.

Calculator 10 specifies the position of operator 400 using the OctoMap for each cycle. The occupancy of the voxel at which operator 400 is currently located exhibits a high value. Calculator 10 specifies the position of operator 400 based on a high-occupancy voxel position in the OctoMap. For instance, calculator 10 may specify the center of gravity of operator 400 as the position of operator 400. Calculator 10 may specify the center of gravity of a hand or arm of operator 400 near robot 200 as the position of operator 400.

Calculator 10 may apply a binarizing process to the OctoMap so that the occupancy of each voxel takes either 0 or 1 and then specify the position of operator 400 using the binarized OctoMap. This may further lessen the computing load.

Calculator 10 calculates distance $D_{eucl}$ based on the current position of the tool center point of manipulator 202 and the position of operator 400 specified from the OctoMap generated during the current cycle.

Calculator 10 calculates rate vector $v_{obs}$ of operator 400 using the OctoMap generated during a certain period in the past.

Calculator 10 calculates length $S_{cur}$ based on the current position of the tool center point of manipulator 202 and the trajectory of the tool center point. The trajectory of the tool center point is generated by generator 12 as described later.

The sigmoidal function, Sigmoid ($S_{cur}$, $S_{thrd}$), is expressed by the following Formula (2). In the Formula (2), "a" is a constant.

[Mathematical Formula 2]

$$Sigmoid(S_{cur}, S_{thrd}) = \frac{1}{1 + e^{-a(S_{cur} - S_{thrd})}} \qquad \text{Formula (2)}$$

Fig. 4 is a graph illustrating an example of the sigmoidal function. As illustrated in Fig. 4, the sigmoidal function, Sigmoid ($S_{cur}$, $S_{thrd}$), increases as $S_{cur}$ currently less than $S_{thrd}$ is more approximate to $S_{thrd}$ and further increases to 1 as $S_{cur}$ starts to exceed $S_{thrd}$. The inclination near $S_{thrd}$ depends on the constant "a". The inclination exhibited near $S_{thrd}$ becomes sharper with a greater value of constant "a".

Calculator 10 obtains, as the circumventing operation term $P_{scoil}$, a value calculated as follows; a total value of the occupancy of one or more voxels present on the trajectory of the tool center point from the current position to a target position is multiplied by a predetermined coefficient. In the case of no object on the trajectory, the circumventing operation term, $P_{scoil}$, results 0. The trajectory is generated by generator 12 as described later. Then, calculator 10 calculates the circumventing operation term, $P_{scoil}$, using the trajectory generated by generator 12. The trajectory when the operation starts is taught by teaching data 132 stored in storage 116.

Directional function $H_{dict}$ of the rate vector is expressed by the following Formula (3). As in the Formula (3), directional function $H_{dict}$ is the hyperbolic tangent function. In this Formula (3), "K" and "b" are constants, which are respectively set to 3/2 and 10. The variable x in the Formula (3) is calculated by the Formula (4).

[Mathematical Formula 3]

$$H_{dict} = K(1 + \tanh(b(x - x_{thrd})))$$
$$= K\left(1 + \frac{e^{b(x-x_{thrd})} - e^{-b(x-x_{thrd})}}{e^{b(x-x_{thrd})} + e^{-b(x-x_{thrd})}}\right) \quad \text{Formula (3)}$$

[Mathematical Formula 4]

$$x = \frac{(v_{obs} - v_{tcp}) \cdot v}{|v_{obs} - v_{tcp}| \cdot |v|} \quad \text{Formula (4)}$$

In this formula, $v_{tcp}$ is a rate vector of the tool center point of manipulator 202. Calculator 10 calculates rate vector $v_{tcp}$ based on the latest command transmitted to and received by manipulator controller 204.

Further, "v" is a vector, the start point of which is the position of operator 400 and the end point of which is the position of the tool center point. Calculator 10 calculates the vector v based on the current position of the tool center point and the position of operator 400 specified from the OctoMap generated during the current cycle.

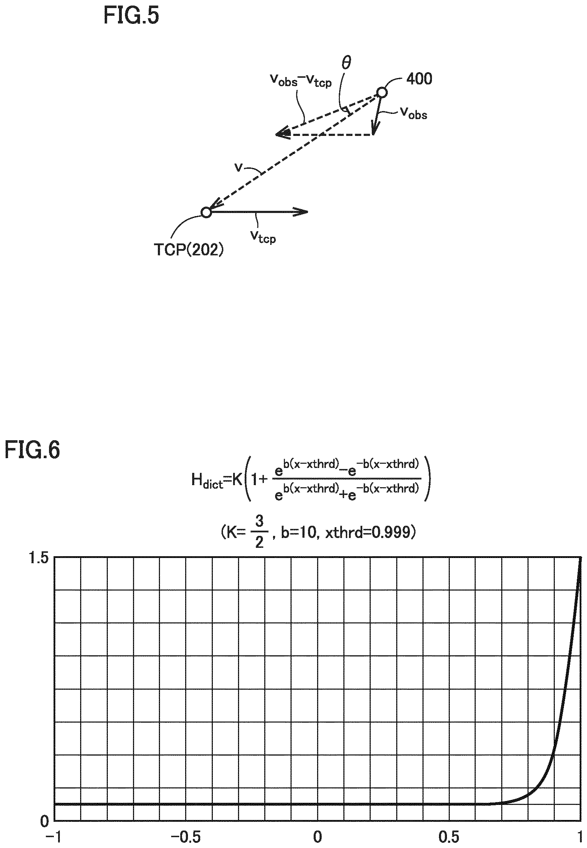

Fig. 5 is a view illustrating a relationship between vector v and rate vectors $v_{obs}$ and $v_{tcp}$. As illustrated in Fig. 5, x calculated by the Formula (4) is the cosine ($\cos\theta$) of an angle $\theta$ made by vector ($v_{obs}$-$V_{tcp}$) and vector v. Hence, "x" has a value ranging from -1 to 1.

Angle $\theta$ is, in other words, an angle made by a direction of relative movement of operator 400 to the tool center point TCP and a line that connects operator 400 with the tool center point TCP. As the "x" has a value more approximate to 1, therefore, operator 400 is more likely to be moving toward the tool center point TCP.

Fig. 6 is a graph illustrating an example of directional function $H_{dict}$ of the rate vectors. In Fig. 6 is illustrated directional function $H_{dict}$ when K = 3/2, b = 10, and $x_{thrd}$ = 0.999. As illustrated in Fig. 6, directional function $H_{dict}$ exhibits a sharp rise from around x = 0.76. When angle $\theta$ illustrated in Fig. 5 is 40°, x = 0.766 is obtained. More specifically, directional function $H_{dict}$ takes a significant value when angle $\theta$; angle made by a direction of relative movement of operator 400 to the tool center point TCP and a line that connects operator 400 with the tool center point TCP, stays within the range of -40° to 40°, while directional function $H_{dict}$ is approximately 0 when angle $\theta$ is beyond the range.

The angles at which the cosine is 0.999 are ±2.56°. Thus, directional function $H_{dict}$ takes a value equal to or greater than K when angle $\theta$ stays within the range of - 2.56° to 2.56°.

By assigning the variables thus calculated to the Formula (1), calculator 10 calculates risk value, "$I_{risk}$", which indicates a risk of interference of manipulator 202 with an object in each cycle.

Directional function $H_{dict}$ is written in the first term of the Formula (1). The first term, therefore, becomes approximately 0 when angle $\theta$; angle made by a direction of relative movement of operator 400 to the tool center point TCP and a line that connects operator 400 with the tool center point TCP, is beyond the range of -40° to 40°. The first term takes a positive significant value when angle $\theta$ stays within the range of -40° to 40°. Thus, risk value $I_{risk}$ has a greater value with a smaller degree of angle $\theta$. Distance $D_{eucl}$, which is a distance between operator 400 and the tool center point, is written in the denominator of the first term. Risk value $I_{risk}$ has a greater value with a smaller dimension of distance $D_{eucl}$. The squared rate vector $v_{obs}$ of operator 400 is written in the numerator of the first term. Thus, risk value $I_{risk}$ has a greater value as operator 400 moves faster.

Angle $\theta$ beyond the range of -40° to 40° suggests a lower risk of interference of operator 400 with manipulator 202. Angle $\theta$ within the range of -40° to 40° involves a higher risk of interference of operator 400 with manipulator 202, and the risk of interference further increases with a smaller degree of angle θ. When operator 400 and the tool center point are more proximate to each other, operator 400 may be more likely to interfere with manipulator 202. Operator 400, as operator 400 moves faster, is more likely to interfere with manipulator 202. Thus, risk value, $I_{risk}$, may offer accurate estimation of the risk of interference between operator 400 and manipulator 202.

The sigmoidal function, Sigmoid ($S_{cur}$, $S_{thrd}$), is written in the first term. As illustrated in Fig. 4, the sigmoidal function, Sigmoid ($S_{cur}$, $S_{thrd}$), increases with a greater value of $S_{cur}$, i.e., as the tool center point of manipulator 202 is closer to the finish position. In the Formula (1), therefore, risk value $I_{risk}$ exhibits a greater value as the tool center point of manipulator 202 is the finish position. The risk value is thus set because operator 400 may be more likely to interference with manipulator 202 and exposed to a greater danger when the tool center point of manipulator 202 is approaching the finish position than when robot 200 just started to operate.

In a space around manipulator 202, an obstacle may be accidentally present on the trajectory of manipulator 202. In that case, possible contact or collision with of manipulator 202 with the obstacle should desirably be avoided. For that reason, the Formula (1) has the circumventing operation term $P_{scoil}$.

Calculator 10 outputs the calculated risk value to generator 12. For each control cycle, calculator 10 outputs a first information to information providing device 500. This first information contains the following pieces of information in a manner that they are associated with one another; risk value calculated in the relevant control cycle, step ID for identification of the cooperative working step targeted for the risk value calculation, position of the tool center point used for the risk value calculation, position of operator 400 used for the risk value calculation, and time point of the control cycle (for example, starting time of the control cycle).

<Processing details of generator>

Generator 12, in order to cause manipulator 202 to perform a target movement (movement from the start position to the finish position), generates a command for each control cycle during the target movement and outputs the generated command to manipulator controller 204.

In each control cycle, generator 12 generates a command that causes manipulator 202 to operate in order to avoid possible interference of manipulator 202 with any object nearby depending on the risk value calculated by calculator 10.

Specifically, generator 12 sets a group including a plurality of different operations depending on the position of manipulator 202. Then, generator 12 generates a command that causes robot 200 to operate in accordance with a selected one of the target operations selected from the set group depending on the risk value.

Generator 12 outputs the generated command to manipulator controller 204 and also generates a second information and a third information associated with the target movement for each one of the target movements repeatedly performed. Then, generator 12 outputs the generated second information and third information to information providing device 500. The second information contains the following pieces of information, for each control cycle during the target movement, in a manner that they are associated with one another; time point of the control cycle (for example, starting time of the control cycle), operation ID for identification of the target operation selected in the control cycle, and a command generated in the control cycle. The third information contains the starting time and ending time of the target movement. To the second information and the third information are appended a step ID for identification of the cooperative working step including robot 200 to be controlled.

[Group setting method]

Generator 12 sets one of a first group and a second group as a group including a plurality of possible operations of robot 200 depending on the position of manipulator 202.

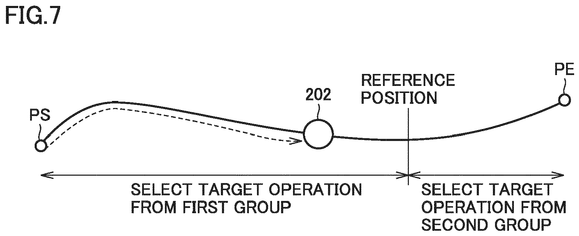

Fig. 7 is a view illustrating a group setting method for groups each including a plurality of different operations. As illustrated in Fig. 7, generator 12 sets the first group when manipulator 202 is closer to a start position PS than a reference position, while setting the second group when manipulator 202 is closer to a finish position PE than the reference position.

Generator 12 decides a warning action activating flag $W_{act}$ in accordance with the following Formula (5). Generator 12 sets the first group when warning action activating flag $W_{act}$ is 0, while setting the second group when warning action activating flag $W_{act}$ is 1.

[Mathematical Formula 5]

$$W_{act} = \begin{cases} 1 & Sigmoid(S_{cur}, S_{thrd}) > Th \\ 0 & Sigmoid(S_{cur}, S_{thrd}) \leq Th \end{cases} \qquad \text{Formula (5)}$$

In the Formula (5), a threshold Th is defined in advance. The reference position is a position away from the start position along the trajectory by a length $S_{cur}$ when the sigmoidal function, Sigmoid ($S_{cur}$, $S_{thrd}$), having a value less than or equal to threshold Th starts to exceed threshold Th. Threshold Th, therefore, is set depending on the reference position. Threshold Th may be, for example, a value approximate to 0 (for example, value between 0.05 and 0.1). Depending on the digit number of significant figures, the sigmoidal function, Sigmoid ($S_{cur}$, $S_{thrd}$), may possibly continue to take the value of 0 for a certain period of time after the tool center point starts to move from the start position. Thus, threshold Th may be set to 0.

Generator 12 generates a command that causes robot 200 to operate in accordance with the target operation selected from the set group depending on the risk value.

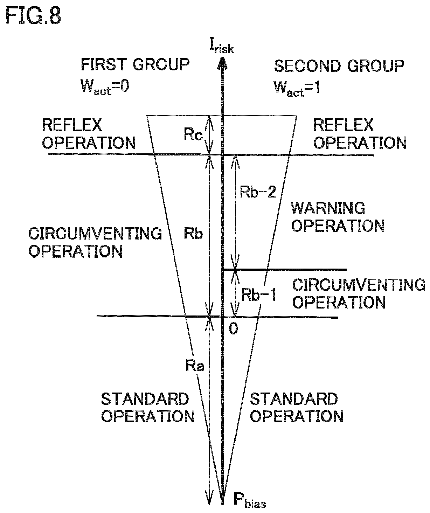

Fig. 8 is a view illustrating exemplified operations included in the groups. As illustrated in Fig. 8, the first group includes standard operation, circumventing operation, and reflex operation. The second group includes standard operation, circumventing operation, warning operation, and reflex operation.

When the first group is set, generator 12 selects the target operation as follows. Generator 12 selects the standard operation as the target operation when risk value $I_{risk}$ stays within a range Ra. Generator 12 selects the circumventing operation when risk value $I_{risk}$ stays within a range Rb; range of upper values than range Ra. Generator 12 selects the reflex operation when risk value $I_{risk}$ stays within a range Rc; range of upper values than range Rb.

When the second group is set, generator 12 selects the target operation as follows. Generator 12 selects the standard operation as the target operation when risk value $I_{risk}$ stays within a range Ra. Generator 12 selects the circumventing operation when risk value $I_{risk}$ stays within a sub range Rb-1; a part of range Rb. Generator 12 selects the warning operation when risk value $I_{risk}$ stays within a sub range Rb-2; another part of range Rb that differs from sub range Rb-1. Sub range Rb-2 is a range of upper values than sub range Rb-1. Generator 12 selects the reflex operation when risk value $I_{risk}$ is within range Rc.

[Standard operation]

The standard operation is selected in response to a low risk of interference between manipulator 202 and an object. Therefore, range Ra is set to, for example, a range from 0 to a possible lowest value $P_{bias}$ (negative value) of risk value $I_{risk}$. When risk value $I_{risk}$ is less than or equal to 0, the risk of interference between manipulator 202 and an object may be easily recognized as very small.

The standard operation maintains a standard rate of movement without any change of the trajectory. The standard rate of movement refers to a rate of movement of the tool center point calculated at each point on the trajectory so that a highest rate of movement on the trajectory is equal to a preset rate of movement. Generator 12 selects the trajectory suggested by teaching data 132 when the operation starts. Generator 12 maintains the trajectory suggested by teaching data 132 unless the circumventing operation is selected as the target operation. In case the standard operation is selected as the target operation subsequent to the circumventing operation, generator 12 maintains the trajectory changed when the circumventing operation was selected.

Generator 12 specifies the target position and standard rate of movement of the tool center point for each control cycle based on the trajectory. Controller 100, for each control cycle, generates a command relating to the specified target position and standard rate of movement and outputs the generated command to manipulator controller 204.

[Circumventing operation]

The circumventing operation is an operation that changes the trajectory to reduce risk value $I_{risk}$. Generator 12 specifies the target position and rate of movement of the tool center point for the next control cycle based on the changed trajectory. Controller 100 generates a command relating to the specified target position and rate of movement and outputs the generated command to manipulator controller 204.

Generator 12 may decide the changed trajectory using the technology described in "Multi 3D camera mapping for predictive and reflexive robot manipulator trajectory estimation, Justinas Miseikis, et. al, with three others, 2016 IEEE Symposium Series on Computational Intelligence (SSCI)". Specifically, generator 12, for example, searches a plurality of prospective trajectories from the current position to the finish position using the technique of RRT (Rapidly-exploring Random Trees)-Connect. This search is exercised within a predefined time limit. Generator 12, using the following Formula (6), calculates a cost Ctraj for each of the searched prospective trajectories.

[Mathematical Formula 6]

$$C_{traj} = \sum_{voxel} \left( D_{traj} + D_{traj} * C_{voxel} \right)$$

$$= \sum_{voxel} D_{traj} + \sum_{voxel} D_{traj} * C_{voxel} \qquad \text{Formula (6)}$$

In this formula, $D_{traj}$ is a Euclidean distance of each voxel. The first term of the Formula 6) is the summed Euclidean distances of voxels which the prospective trajectory passes through. $C_{voxel}$ is the occupancy of each of the voxels which the prospective trajectory passes through. The second term of the Formula (6) expresses the probability of an object being present on the prospective trajectory.

Generator 12 decides, as the changed trajectory, the prospective trajectory having a smallest value of cost Ctraj. Thus, the current trajectory is changed to a trajectory with a smaller risk of interference between manipulator 202 and an object.

[Warning operation]

The warning operation is an operation that reduces the rate of movement without any change of the trajectory. Generator 12 specifies the target position and standard rate of movement of the tool center point for each control cycle in the same manner as in the standard operation. Next, generator 12 decides 1/2 of the specified standard rate of movement as the rate of movement. Generator 12 generates a command relating to the specified target position and rate of movement and outputs the generated command to manipulator controller 204.

Otherwise, generator 12 may decide a rate of movement $V_{curr}$ in accordance with the Formula (7). In the Formula (7), $V_{std}$ is a standard rate of movement specified in the standard operation.

[Mathematical Formula 7]

$$V_{curr} = \left( 1 - Sigmoid(S_{cur}, S_{thrd}) \right) V_{std} \qquad \text{Formula (7)}$$

Rate of movement $V_{curr}$ is thus decided according to the Formula (7). Then, rate of movement $V_{curr}$ of the warning operation slows down as manipulator 202 is moving toward the finish position. This may be rephrased that a ratio obtained by comparing rate of movement $V_{curr}$ of manipulator 202 during the warning operation to standard rate of movement Vstd has a smaller value with a greater dimension of length $S_{cur}$ from the start position along the trajectory of manipulator 202 to the current position of manipulator 202.

[Reflex operation]

The reflex operation is a movement that transports manipulator 202 back to the start position along the trajectory. Specifically, generator 12 generates a command relating to return of the manipulator to one or more pre-control cycle target positions and then outputs the generated command to manipulator controller 204.

<Hardware configuration of information providing device>

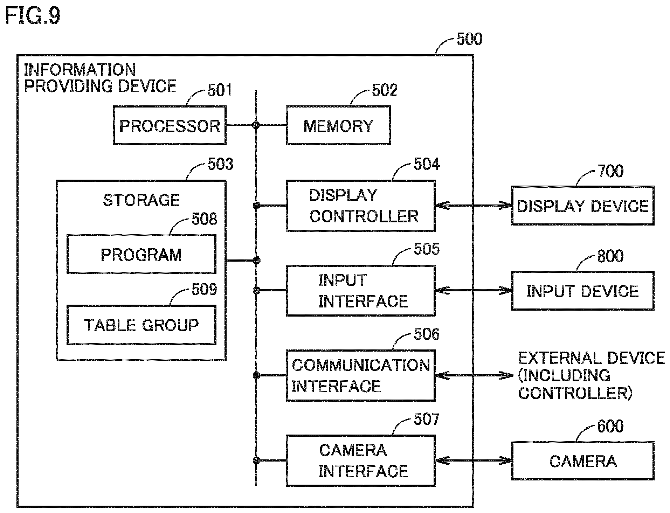

Fig. 9 is a schematic view illustrating exemplified hardware elements of the information providing device according to the embodiment. As illustrated in Fig. 9, information providing device 500 is typically so structured that conforms to a general-purpose computational architecture.

Information providing device 500 includes a processor 501 like CPU or MPU, a memory 502, a storage 503, a display controller 504, an input interface 505, a communication interface 506, and a camera interface 507. These components are interconnected in a manner that they are allowed to transmit and receive data to and from one another.

Processor 501 imports a program 508 stored in storage 503 into memory 502 and runs the imported program to actualize processing steps according to this embodiment.

Memory 502 is typically a volatile storage device, for example, DRAM, in which program 508 read from storage 503 is storable.

Storage 503 is typically a non-volatile magnetic storage device, for example, hard disc drive. Storage 503 stores therein program 508 executed by processor 501 and a table group 509 updated by the program execution. Program 508 installed into storage 503 may be stored in a memory card and made available.

Display controller 504 is connected to display device 700 and outputs signals for display of various pieces of information to display device 700 in accordance with internal commands from processor 501.

Input interface 505 mediates data transmission between processor 501 and input device 800 including, for example, a keyboard, mouse, touch panel or dedicated console. Input interface 505 receives an operation command issued in response to a user's manipulation of input device 800.

Communication interface 506 mediates data transmission between processor 501 and an external device (for example, controller 100 (see Fig. 1), work database and production management device not illustrated in the drawings). Communication interface 506 typically includes Ethernet (registered trademark) and/or USB (Universal Serial Bus). Program 508 may be downloaded from, for example, a delivery service through communication interface 506.

For use of a computer that conforms to the general-purpose computational architecture described above, an OS (Operating System) that enables computational basic features may be installed in addition to an application(s) that enables the features of this embodiment. In this instance, the program according to this embodiment may invoke, in a predetermined sequential order, necessary ones of program modules offered as part of the OS and execute the invoked program modules. The program of this embodiment per se may include none of such modules and may instead cooperate with the OS to execute processing steps.

As an alternative choice, features offered by the execution of program 508 may be implemented, in whole or in part, as a dedicated hardware circuit.

<Functional configuration of information providing device>

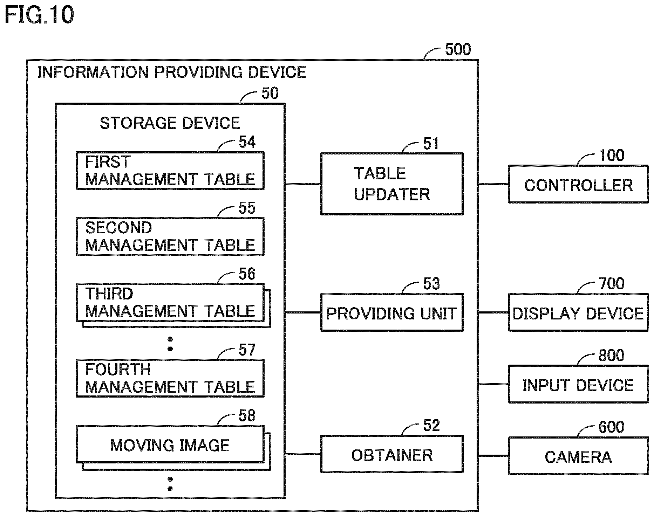

Fig. 10 is a block diagram of exemplified functional elements of the information providing device. As illustrated in Fig. 10, information providing device 500 includes a storage unit 50, a table updater 51, an obtainer 52, and a providing unit 53. Storage unit 50 includes memory 502 and storage 503 illustrated in Fig. 9. Table updater 51 includes communication interface 506 and processor 501 that executes program 508 illustrated in Fig. 9. Obtainer 52 includes camera interface 507 and processor 501 that executes program 508 illustrated in Fig. 9. Providing unit 53 includes display controller 504, input interface 505, and processor 501 that executes program 508 illustrated in Fig. 9.

[Obtainer]

Obtainer 52 obtains moving image data from camera 600 (hereinafter "moving image 58") and stores an obtained moving image 58 in storage unit 50. In case cooperation system 1 is equipped with a plurality of cameras 600, a plurality of moving images 58 are stored in storage unit 50.

[Table updater]

Table updater 51 accesses a work database not illustrated in the drawings to update a first management table 54 stored in storage unit 50. For instance, table updater 51 accesses the work database at regular intervals to obtain the attributes of operators in charge of work duties in the production site and then updates first management table 54 based on the obtained attributes. Otherwise, table updater 51 may receive the attributes of operator 400 who works in the production site through input device 800.

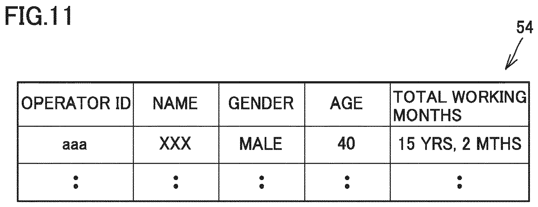

Fig. 11 is a table illustrating an example of the first management table. In first management table 54, operator ID, name, gender, age, and total number of work days are tabulated in a manner that they are associated with one another for each operator 400 who work in the production site, as illustrated in Fig. 11.

Table updater 51 accesses a production management device not illustrated in the drawings to update a second management table 55 stored in storage unit 50. Otherwise, table updater 51 may update second management table 55 based on an operator's entry into work logs through input device 800.

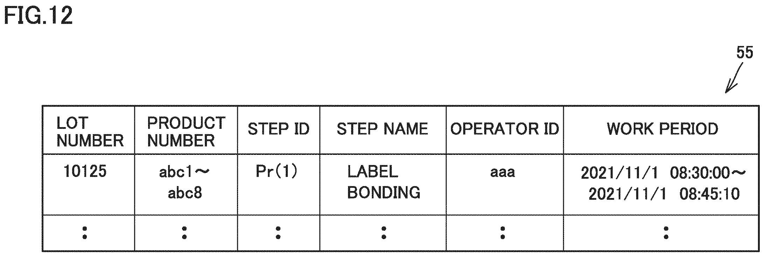

Fig. 12 is a table illustrating an example of the second management table. In second management table 55, lot number, product number, step ID identifying the relevant working step, name of the relevant working step (step name), operator ID for identification of operator 400 currently involved in the relevant working step, and work schedule are tabulated in a manner that they are associated with one another, as illustrated in Fig. 12.

Table updater 51 may update the work schedule recorded in second management table 55 based on moving image 58 obtained from camera 600.

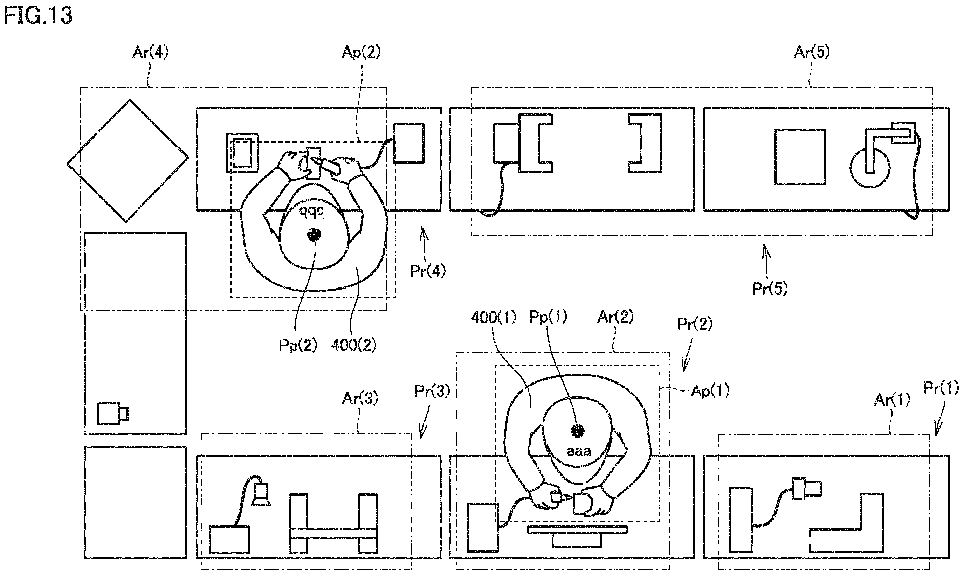

Fig. 13 is a view illustrating exemplified frames included in a moving image. Fig. 13 illustrates frames of a moving image obtained by capturing images of the production site including five working steps Pr (1) to Pr (5). As illustrated in Fig. 13, operator 400 currently involved in the production site is projected in each frame of the moving image.

Monitoring regions Ar (1) to Ar (5) are set respectively for the five working steps Pr (1) to Pr (5). Monitoring regions Ar (1) to Ar (5) are intra-frame regions of the moving image. Monitoring regions Ar (1) to Ar (5) each have a rectangular shape defined by coordinates at four apexes.

Table updater 51 detects a position at which operator 400 is projected in each frame using a known technique for object recognition. Specifically, table updater 51 detects one or more pixels of operator 400 using a known technique for object recognition. Table updater 51 defines a rectangular region Ap including the detected one or more pixels and decided the center of this rectangular region Ap as a position Pp of operator 400. In the example of Fig. 13 are illustrated positions Pp (1) and Pp (2) that have been detected of operators 400 (1) and 400 (2), respectively.

Table updater 51 identifies operator ID of operator 400 based on a text readable from his/her cap in each rectangular region Ap.

Table updater 51, at an imaging time point of each frame, determines whether operator 400 is currently in monitoring region Ar set for each working step Pr. Specifically, table updater 51 determines that operator 400 is currently in monitoring region Ar when monitoring region Ar is known to include position Pp of operator 400. A time slot in which operator 400 is staying in monitoring region Ar may be regarded as a work period in working step Pr for monitoring region Ar.

Hence, table updater 51 determines, for each working step Pr continuous two or more frames in the moving image where operator 400 is determined as being present in monitoring region Ar for the relevant working step Pr. Table updater 51 decides an imaging time point of the first one of the determined frames as a work starting time and decides an imaging time point in the last one of the determined frames as a work ending time. Table updater 51 may record a duration between the decided starting time and ending time as a work period in second management table 55.

Table updater 51 updates a third management table 56 stored in storage unit 50 based on the first information and the second information which are outputs from calculator 10 and generator 12 of controller 100. Storage unit 50 stores therein third management table 56 for each cooperative working step.

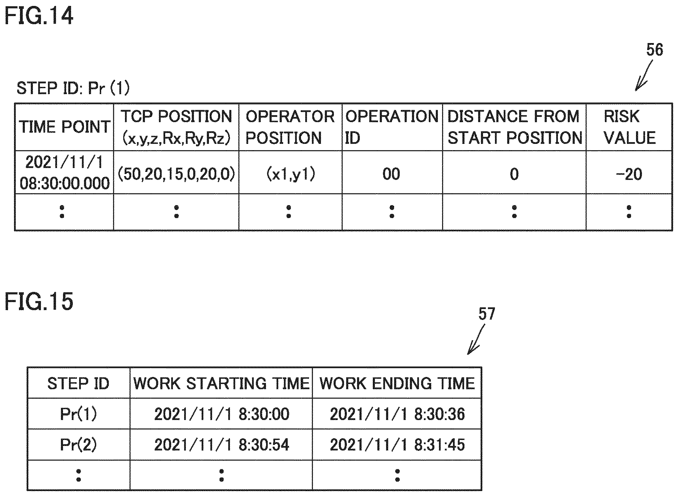

Fig. 14 is a diagram illustrating an example of the third management table. Fig. 14 illustrates third management table 56 for the cooperative working step with step ID "Pr (1)". In third management table 56, a time point, position of the tool center point, position of operator 400, operation ID, distance from the start position of manipulator 202, and risk value are stored in a manner that they are associated with one another for each control cycle during the target movement in the relevant cooperative working step, as illustrated in Fig. 14. The operation ID signifies one of the "standard operation", "circumventing operation", "warning operation" and "reflex operation".

Table updater 51 adds, for each target movement, a record for each control cycle during the relevant target movement in third management table 56. Table updater 51 writes the time point and operation ID known from the second information in the added record. Also, table updater 51 reads, from the first information, the time point written in each record, risk value for the step ID of the relevant cooperative working step, position of the tool center point, and position of operator 400. Then, table updater 51 writes the read data in the relevant record.

Further, table updater 51 calculates a distance from the start position of manipulator 202 based on the position of the tool center point known from the first information. Specifically, table updater 51 connects, with a line, positions of the tool center point from the starting time to an intended time of the target movement. Then, table updater 51 calculates a moving distance of manipulator 202 from the start position along the trajectory based on the length of the line of connection. Table updater 51 writes the calculated moving distance in the record in which the intended time is written.

Table updater 51 updates a fourth management table 57 stored in storage unit 50 based on the third information from generator 12 of controller 100.

Fig. 15 is a diagram illustrating an example of the fourth management table. In fourth management table 57, step ID for identification of the cooperative working step and the starting time and ending time of the target movement are stored for each target movement of each cooperative working step in a manner that they are associated with one another, as illustrated in Fig. 15. Table updater 51 adds a new record to fourth management table 57 every time when the third information is received and then writes, in the new record, the step ID added to the third information and the starting time and ending time known from the third information.

[Providing unit]

Providing unit 53 provides information 70 in which a relationship between the risk value and the position of manipulator 202 is visualized. Specifically, providing unit 53 generates a screen on which information 70 is displayable using first to fourth management tables 54 to 57 and then causes display device 700 to present the generated screen.

<First example of screen>

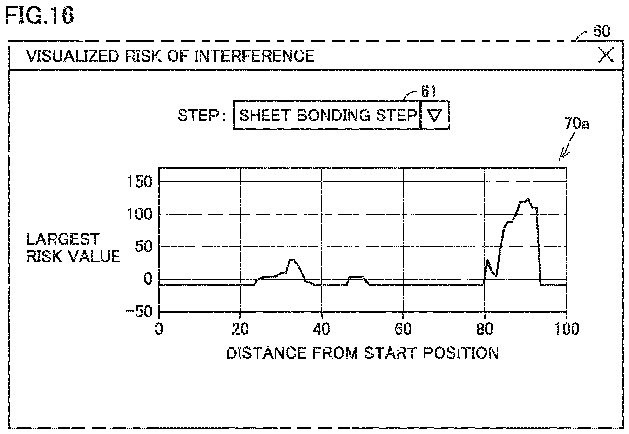

Fig. 16 is a view illustrating a first example of the screen provided by the providing unit. As illustrated in Fig. 16, a screen 60 includes a selection field 61 on which the cooperative working step is selectable, and a graph 70a which is an example of information 70. The lateral axis of graph 70a represents a distance of manipulator 202 from the start position, while the vertical axis of graph 70a represents a largest risk value.

Providing unit 53 reads, from storage unit 50, third management table 56 corresponding to the cooperative working step selected on selection field 61. For each of a plurality of distance ranges, providing unit 53 extracts, from third management table 56, a record in which the distance from the start position is within the relevant distance range and then determines the largest risk value in the extracted record. For each of the distance ranges, providing unit 53 plots, on graph 70a, the largest risk value determined thus with respect to the representative value of the relevant distance range (for example, central distance value).

A user may be able to check and grasp a relationship between the largest risk value and the distance of manipulator 202 from the start position for any desired one of the cooperative working steps. Then, the user may determine that operator 400 has come too close to manipulator 202 when manipulator 202 is known to have moved a distance by which the largest risk value is significantly increased. Then, the user may advise this operator 400 to improve his/her actions and/or movements during the work.

<Second example of screen>

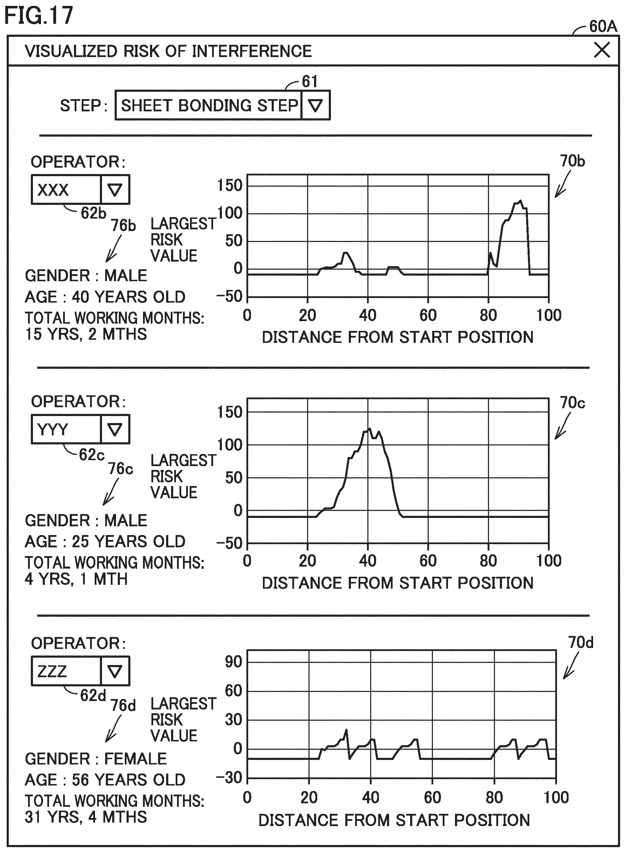

Fig. 17 is a view illustrating a second example of the screen provided by the providing unit. As illustrated in Fig. 17, a screen 60A includes a selection field 61 on which the cooperative working step is selectable, selection fields 62b to 62d on which operator 400 is selectable, graphs 70b to 70d which are each an example of information 70, and attribute display regions 76b to 76d. The lateral axes of graphs 70b to 70d represent a distance of manipulator 202 from the start position, while the vertical axes of graphs 70b to 70d represent a largest risk value.

Providing unit 53 extracts, from second management table 55, a record showing the step ID of the cooperative working step selected on selection field 61 and operator ID of operator 400 selected on selection field 62b. Providing unit 53 reads, from third management table 56 corresponding to the cooperative working step selected on selection field 61, a record showing a time point in a work period known from the extracted record. Of the records thus read from the table, providing unit 53 extracts the record in which the distance from the start position is within each distance range and then determines the largest risk value in the extracted record. Providing unit 53 plots, on graph 70b, the largest risk value determined thus with respect to the representative value of the relevant distance range (for example, central distance value). Similarly, providing unit 53 updates graphs 70c and 70d in regard to operator 400 selected on selection fields 62c and 62d.

Further, providing unit 53 extracts, from first management table 54, records corresponding to operators 400 selected on selection fields 62b to 62d and then displays attributes of operators 400 in attribute display regions 76b to 76d based on the extracted records. Thus, a user, who is, for example, a production leader, may be allowed to check a relationship between the risk value and attributes (for example, total working months). Specifically, the user may be allowed to study and learn whether the risk value reduces with more working months in total, whether the risk value increases with too many working months in total, or whether the risk value increases in the case of inexperienced new workers with fewer working months in total.

Providing unit 53 thus generates a graph in which a relationship between the risk value and the position of manipulator 202 is visualized for each of one or more operators 400. The user may be thus able to check and grasp a relationship between the largest risk value and the distance of manipulator 202 from the start position for each operator 400. This may allow the user to identify operator 400 with a greater risk value and advise this operator 400 to improve his/her actions and/or movements during the work. Also, the user may identify operator 400 with a smaller risk value and use moving image 58 of this operator 400, as an exemplary model, for training of other operators 400.

<Third example of screen>

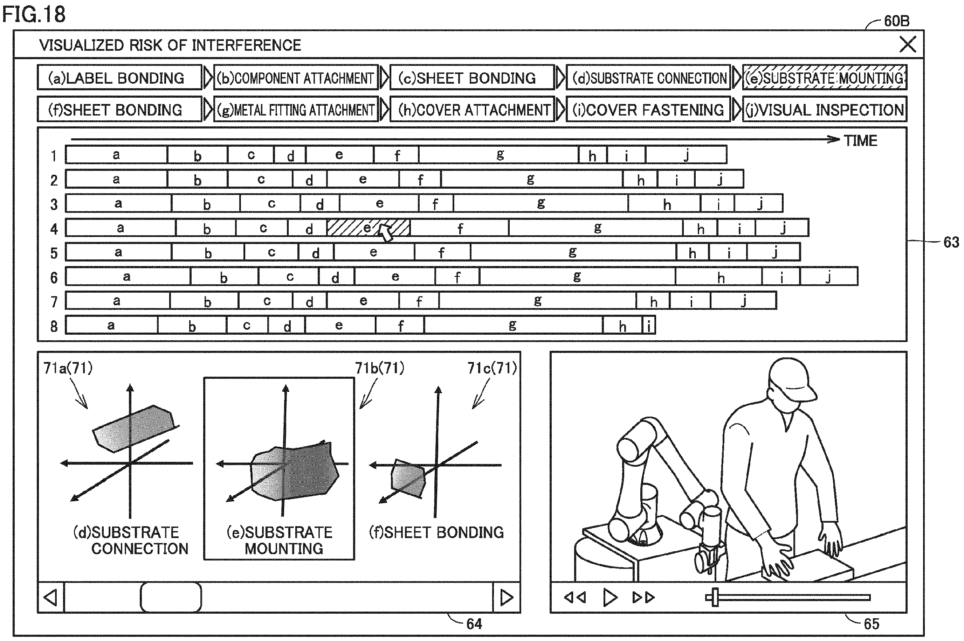

Fig. 18 is a view illustrating a third example of the screen provided by the providing unit. In Fig. 18 is illustrated a screen 60B offered by information providing device 500 of cooperation system 1 used in a production site including 10 cooperative working steps. The 10 cooperative working steps include "label bonding" "component attachment", "sheet bonding", "substrate connection", "substrate mounting", "sheet bonding", "metal fitting attachment", "cover attachment", "cover fastening", and "visual inspection".

Providing unit 53 generates screen 60B for a lot number received through input device 800 and displays screen 60B thus generated. As illustrated in Fig. 18, screen 60B includes regions 63 to 65.

In region 63 is displayed a time chart showing lengths of work hours in the 10 steps for each product of the lot number. The time chart displayed in region 63 relates to eight products of the lot number. These eight products are sequentially produced. In the time chart of these eight products illustrated in region 63, the starting time of the first step "label bonding" is set to 0 for each the eight products.

Providing unit 53 generates the time chart to be displayed in region 63 based on second management table 55 and fourth management table 57. Specifically, providing unit 53 specifies a work period of each step corresponding to the lot number based on second management table 55. Further, providing unit 53 specifies the starting time and ending time of the target movement in each step during the specified work period based on fourth management table 57. Providing unit 53 generates a time chart to be displayed in region 63 based on the obtained pieces of information.

Region 64 displays, as information 70, a heat map 71 in which the risk value at each position of manipulator 202 is expressed in at least one of color or concentration. Heat map 71 is displayed in region 64 for each step.

Providing unit 53 specifies the work period of each step corresponding to the lot number. Providing unit 53 extracts a record showing a time point in the specified work period from third management table 56 corresponding g to each step. Providing unit 53 generates heat map 71 in which the risk value of the extracted record is used as a pixel value of the position of the tool center point known from the extracted record. Supposing that there are a plurality of records that show the same position of the tool center point, providing unit 53 may generate heat map 71 in which a representative value of the risk values of these records (for example, average value, largest value) is used as the pixel value of the tool center point position.

In the example of Fig. 18, region 64 is not large enough to display all of the heat maps for the 10 steps. Thus, providing unit 53 displays, in region 64, heat maps 71 corresponding to a step designated in region 63 and steps before and after this step. In the example of Fig. 18 is designated the step "substrate mounting". Hence, providing unit 53 displays, in region 64, heat maps 71a, 71b and 71c respectively corresponding to three steps, "substrate connection", "substrate mounting" and "sheet bonding. A user may be check heat maps 71 of all of the steps by manipulating a scroll bar in region 64.

A moving image is reproducible in region 65. Providing unit 53 reproduces, in region 65, the moving image of the step designated in region 63 and of its work period designated in region 63. In the example of Fig. 18 is designated the work period of the step "substrate mounting" for the fourth product. Providing unit 53 reads, from fourth management table 57, the starting time and ending time of the designated work period. Providing unit 53 cuts out the moving image of the designated work period from moving image 58 of robot 200 captured with camera 600 in the designated step. Providing unit 53 reproduces this cut-out moving image.

Thus, a user, by checking region 64, may be allowed to grasp a relationship between the risk value and the position of the tool center point of manipulator 202 for each step. The user may also be allowed to know a relationship between positions of operator 400 and of manipulator 202 through visual check of the moving image displayed in region 65. For any step with a greater risk value, the user may first check a relationship between positions of operator 400 and of manipulator 202 and then look into what is causing such an increase of the risk value. Then, the user may be allowed to offer training for operators 400 based on the learned possible cause.

Providing unit 53 may extract, from third management table 56 corresponding to the designated step, a record in which the operation ID signifies the "circumventing operation", "warning operation" or "reflex operation". Providing unit 53 may display, in region 65, a warning at a timing of reproduction of a frame of a time point known from the extracted record. A timing of transition to any operation but the "standard operation" suggests a timing of operator 400 coming too close to manipulator 202. The warning displayed in region 65, therefore, may allow a user to readily know the status of operator 400 too proximate to manipulator 202.

<Modified example>

Providing unit 53 may generate a virtual moving image that shows changes with time of positions of the tool center point and of operator 400 based on third management table 56 and then reproduce the generated virtual moving image. Specifically, providing unit 53 generates a virtual moving image in which each frame represents a virtual space. Providing unit 53 locates a first mark at a position of the tool center point corresponding to a time point in the virtual space shown in the frame at the time point in the virtual moving image. Similarly, providing unit 53 locates a second mark at a position of operator 400 corresponding to a time point in the virtual space shown in the frame at the time point in the virtual moving image. Thus, a user, by checking the virtual moving image, may be allowed to know changes with time of positions of operator 400 and of the tool center point of manipulator 202.

Calculator 10 of controller 100 may specify positions of a plurality of joints of operator 400. In this instance, calculator 10 may calculate the risk value based on one of the specified positions of the joints closest to manipulator 202. Calculator 10 may generate a first information indicating the positions of joints and output the generated first information to information providing device 500.

Table updater 51 of information providing device 500 writes the joint positions indicated by the first information in third management table 56. Then, providing unit 53 may locate the second mark at each of the joint positions in the virtual moving image. As a result, a user, by simply checking the virtual moving image, may be able to grasp the motion of each joint of operator 400.

§3 Additional remarks

As described thus far, the embodiment disclosed herein includes the following technical configurations.

[Configuration 1]

A cooperation system (1) that allows a robot (200) and one or more operators (400) to work together in cooperation, the cooperation system (1) including: a calculator (10, 112) configured to calculate a risk value that indicates interference between a manipulator (202) of the robot (200) and an object (400) around the manipulator (202); a generator (12, 112) configured to generate, depending on the risk value, a command that causes the manipulator (202) to operate so as to avoid the interference between the manipulator (202) and the object (400); and a providing unit (53, 501)providing unit configured to provide information (70, 71) in which a relationship between the risk value and a position of the manipulator (202) is visualized.

[Configuration 2]

The cooperation system (1) according to Configuration 1, in which the providing unit (53, 501) generates the information (70, 71) for each of the one or more operators.

[Configuration 3]

The cooperation system (1) according to Configuration 1 or 2, in which the robot (200) and the one or more operators (400) carry out a plurality of working steps, and the providing unit (53, 501) generates the information (70, 71) for each of the plurality of working steps.

[Configuration 4]

The cooperation system (1) according to any one of Configurations 1 to 3, further including a camera (600) configured to image the robot (200) and an area surrounding the robot (200), in which the providing unit (53, 501) provides a screen on which a moving image obtained as a result of the imaging by the camera (600) is reproduced.

[Configuration 5]

The cooperation system (1) according to Configuration 3, in which the providing unit (53, 501) provides a screen (60, 60A, 60B) on which input of a selected one of the plurality of working steps is received, and the providing unit (53, 501) displays the information (70, 71) relevant to the selected one of the plurality of working steps on the screen.

[Configuration 6]

The cooperation system (1) according to Configuration 5, further including a camera (600) configured to image the robot (200) and an area surrounding the robot (200) in which the providing unit (53, 501) further provides a moving image (58) obtained as a result of the imaging by the camera (600) during the selected one of the plurality of working steps.

[Configuration 7]

The cooperation system according to any one of Configurations 1 to 6, in which the robot (200) is controlled so that the manipulator (202) is allowed to move from a start position to a finish position, and the information includes a graph (70a - 70d) showing changes of the risk value relative to a distance of the manipulator (202) from the start position.

[Configuration 8]

The cooperation system according to any one of Configurations 1 to 7, in which the information includes a heat map (71, 71a - 71c) in which the risk value at each position of the manipulator (202) is expressed in at least one of color or concentration.

All of the embodiments are disclosed herein by way of illustration and example only and should not be construed as limiting by any means the scope of this disclosure. The scope of this disclosure is solely defined by the appended claims and is intended to cover the claims, equivalents, and all of possible modifications made without departing the scope of this disclosure.

**Claims**

1. A cooperation system (1) that allows a robot (200) and one or more operators (400) to work together in cooperation, the cooperation system (1) comprising:

   a calculator (10, 112) configured to calculate a risk value that indicates a risk of interference between a manipulator (202) of the robot (200) and an object (400) around the manipulator (202);
   a generator (12, 112) configured to generate, depending on the risk value, a command that causes the manipulator (202) to operate so as to avoid the interference between the manipulator (202) and the object (400); and
   a providing unit (53, 501) configured to provide information (70, 71) in which a relationship between the risk value and a position of the manipulator (202) is visualized.

2. The cooperation system (1) according to claim 1, wherein
   the providing unit (53, 501) generates the information (70, 71) for each of the one or more operators.

3. The cooperation system (1) according to claim 1 or 2, wherein

   the robot (200) and the one or more operators (400) carry out a plurality of working steps, and
   the providing unit (53, 501) generates the information (70, 71) for each of the plurality of working steps.

4. The cooperation system (1) according to any one of claims 1 to 3, further comprising a camera (600) configured to image the robot (200) and an area surrounding the robot (200), wherein
   the providing unit (53, 501) provides a screen on which a moving image obtained as a result of the imaging by the camera (600) is reproduced.

5. The cooperation system (1) according to claim 3, wherein

   the providing unit (53, 501) provides a screen (60, 60A, 60B) on which input of a selected one of the plurality of working steps is received, and
   the providing unit (53, 501) displays the information (70, 71) relevant to the selected one of the plurality of working steps on the screen.

6. The cooperation system (1) according to claim 5, further comprising a camera (600) configured to image the robot (200) and an area surrounding the robot (200), wherein
   the providing unit (53, 501) further provides a moving image (58) obtained as a result of the imaging by the camera (600) during the selected one of the plurality of working steps.

7. The cooperation system according to any one of claims 1 to 6, wherein

   the robot (200) is controlled so that the manipulator (202) is allowed to move from a start position to a finish position, and
   the information includes a graph (70a to 70d) showing changes of the risk value relative to a distance of the manipulator (202) from the start position.

8. The cooperation system according to any one of claims 1 to 7, wherein
   the information includes a heat map (71, 71a to 71c) in which the risk value at each position of the manipulator (202) is expressed in at least one of color or concentration.

FIG.1

FIG.2

FIELD NETWORK

100

120

FIELD NETWORK CONTROLLER

110

112

PROCESSOR

114

MAIN MEMORY

116

STORAGE

130

SYSTEM PROGRAM

132

TEACHING DATA

119

INTERFACE CIRCUIT

118

INTERFACE CIRCUIT

500

INFORMATION PROVIDING DEVICE

200

FIG.3

900

FIG.4

$$\text{Sigmoid}_{(\text{Scur, Sthrd})} = \frac{1}{1+e^{-a(\text{Scur}-\text{Sthrd})}}$$

# FIG.5

# FIG.6

$$H_{dict}=K\left(1+\frac{e^{b(x-xthrd)}-e^{-b(x-xthrd)}}{e^{b(x-xthrd)}+e^{-b(x-xthrd)}}\right)$$

$$(K=\frac{3}{2}, b=10, xthrd=0.999)$$

FIG.7

FIG.8

# FIG.9

INFORMATION PROVIDING DEVICE ~500

PROCESSOR ~501

MEMORY ~502

STORAGE ~503

PROGRAM ~508

TABLE GROUP ~509

DISPLAY CONTROLLER ~504 ⟷ DISPLAY DEVICE ~700

INPUT INTERFACE ~505 ⟷ INPUT DEVICE ~800

COMMUNICATION INTERFACE ~506 ⟷ EXTERNAL DEVICE (INCLUDING CONTROLLER)

CAMERA INTERFACE ~507 ⟷ CAMERA ~600

FIG.10

INFORMATION PROVIDING DEVICE — 500

STORAGE DEVICE — 50

FIRST MANAGEMENT TABLE — 54

SECOND MANAGEMENT TABLE — 55

THIRD MANAGEMENT TABLE — 56

FOURTH MANAGEMENT TABLE — 57

MOVING IMAGE — 58

TABLE UPDATER — 51

PROVIDING UNIT — 53

OBTAINER — 52

CONTROLLER — 100

DISPLAY DEVICE — 700

INPUT DEVICE — 800

CAMERA — 600

FIG.11

54

| OPERATOR ID | NAME | GENDER | AGE | TOTAL WORKING MONTHS |
|---|---|---|---|---|
| aaa | XXX | MALE | 40 | 15 YRS, 2 MTHS |
| ⋮ | ⋮ | ⋮ | ⋮ | ⋮ |

FIG.12

55

| LOT NUMBER | PRODUCT NUMBER | STEP ID | STEP NAME | OPERATOR ID | WORK PERIOD |
|---|---|---|---|---|---|
| 10125 | abc1～abc8 | Pr(1) | LABEL BONDING | aaa | 2021/11/1  08:30:00～<br>2021/11/1  08:45:10 |
| ⋮ | ⋮ | ⋮ | ⋮ | ⋮ | ⋮ |

# FIG.13

EP 4 197 711 A1

## FIG.14

STEP ID: Pr (1)

56

| TIME POINT | TCP POSITION (x,y,z,Rx,Ry,Rz) | OPERATOR POSITION | OPERATION ID | DISTANCE FROM START POSITION | RISK VALUE |
|---|---|---|---|---|---|
| 2021/11/1 08:30:00.000 | (50,20,15,0,20,0) | (x1,y1) | 00 | 0 | −20 |
| ⋮ | ⋮ | ⋮ | ⋮ | ⋮ | ⋮ |

## FIG.15

57

| STEP ID | WORK STARTING TIME | WORK ENDING TIME |
|---|---|---|
| Pr(1) | 2021/11/1 8:30:00 | 2021/11/1 8:30:36 |
| Pr(2) | 2021/11/1 8:30:54 | 2021/11/1 8:31:45 |
| ⋮ | ⋮ | ⋮ |

FIG.16

VISUALIZED RISK OF INTERFERENCE ⎯60 ✕

STEP : | SHEET BONDING STEP ▽ | ⎯61

70a

LARGEST RISK VALUE

150
100
50
0
−50

0    20    40    60    80    100

DISTANCE FROM START POSITION

## FIG.17

**VISUALIZED RISK OF INTERFERENCE** ✕ — 60A

STEP : [ SHEET BONDING STEP ▽ ] — 61

**OPERATOR:** 70b
[ XXX ▽ ] — 62b
76b LARGEST RISK VALUE
GENDER : MALE
AGE : 40 YEARS OLD
TOTAL WORKING MONTHS:
15 YRS, 2 MTHS
DISTANCE FROM START POSITION

**OPERATOR:** 70c
[ YYY ▽ ] — 62c
76c LARGEST RISK VALUE
GENDER : MALE
AGE : 25 YEARS OLD
TOTAL WORKING MONTHS:
4 YRS, 1 MTH
DISTANCE FROM START POSITION

**OPERATOR:** 70d
[ ZZZ ▽ ] — 62d
76d LARGEST RISK VALUE
GENDER : FEMALE
AGE : 56 YEARS OLD
TOTAL WORKING MONTHS:
31 YRS, 4 MTHS
DISTANCE FROM START POSITION

# FIG.18

## VISUALIZED RISK OF INTERFERENCE ✕

60B

| (a)LABEL BONDING | (b)COMPONENT ATTACHMENT | (c)SHEET BONDING | (d)SUBSTRATE CONNECTION | (e)SUBSTRATE MOUNTING |
|---|---|---|---|---|
| (f)SHEET BONDING | (g)METAL FITTING ATTACHMENT | (h)COVER ATTACHMENT | (i)COVER FASTENING | (j)VISUAL INSPECTION |

TIME →

```
1   a      b    c   d   e    f        g      h  i    j
2   a      b    c    d    e    f         g       h  i   j
3   a       b     c    d    e     f        g       h    i    j
4   a      b    c   d  [e]     f         g        h  i   j
5   a      b    c   d   e    f       g        h  i    j
6    a       b     c    d    e    f        g         h     i      j
7   a      b    c   d   e   f        g        h   i    j
8   a     b    c   d   e   f      g       h i
```

63

71a(71)                    71b(71)         71c(71)

(d)SUBSTRATE           (e)SUBSTRATE        (f)SHEET BONDING
CONNECTION            MOUNTING

◁ ▷        64

◁◁ ▷ ▷▷              65

Europäisches
Patentamt

European
Patent Office

Office européen
des brevets

## EUROPEAN SEARCH REPORT

**Application Number**

EP 22 20 9702

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU ZHIHAO ET AL: "Dynamic risk assessment and active response strategy for industrial human-robot collaboration", COMPUTERS & INDUSTRIAL ENGINEERING, PERGAMON, AMSTERDAM, NL, vol. 141, 23 January 2020 (2020-01-23), XP086050553, ISSN: 0360-8352, DOI: 10.1016/J.CIE.2020.106302 [retrieved on 2020-01-23] * abstract * * figures 1, 2, 8, 9, 11, 28 * * sections 3-5 * | 1-8 | INV. B25J9/16 |
| A | US 2015/006240 A1 (KANAMARU HIROO [JP] ET AL) 1 January 2015 (2015-01-01) * abstract * * figure 1 * * paragraphs [0016] - [0029] * | 1-8 | |
| A | Voos Holger ET AL: "Development of Safe Autonomous Mobile Service Robots using an Active Integrated Approach", , 1 January 2010 (2010-01-01), XP093041073, Retrieved from the Internet: URL:https://orbilu.uni.lu/bitstream/10993/24707/1/Ertle%20et%20al.%20-%202010%20-%20Development%20of%20Safe%20Autonomous%20Mobile%20Service%20Robo.pdf [retrieved on 2023-04-21] * abstract * * figure 5 * * section 5 * | 1-8 | **TECHNICAL FIELDS SEARCHED (IPC)**<br><br>B25J<br>G06Q<br>G05B |

-/--

The present search report has been drawn up for all claims

| Place of search | Date of completion of the search | Examiner |
|---|---|---|
| The Hague | 26 April 2023 | Hageman, Elodie |

EPO FORM 1503 03.82 (P04C01)

Europäisches
Patentamt

European
Patent Office

Office européen
des brevets

## EUROPEAN SEARCH REPORT

**Application Number**

EP 22 20 9702

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/222392 A1 (UNIV INDUSTRY COOPERATION GROUP KYUNG HEE UNIV [KR]) 5 November 2020 (2020-11-05) * abstract * * figure 12 * * paragraphs [0041] – [0097] * ----- | 1-8 | |

TECHNICAL FIELDS SEARCHED (IPC)

The present search report has been drawn up for all claims

| Place of search | Date of completion of the search | Examiner |
|---|---|---|
| The Hague | 26 April 2023 | Hageman, Elodie |

EPO FORM 1503 03.82 (P04C01)

## ANNEX TO THE EUROPEAN SEARCH REPORT
## ON EUROPEAN PATENT APPLICATION NO.

EP 22 20 9702

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2023

| Patent document cited in search report | Publication date | Patent family member(s) | Publication date |
|---|---|---|---|
| US 2015006240 A1 | 01-01-2015 | CN 104039513 A | 10-09-2014 |
| | | DE 112012005650 T5 | 09-10-2014 |
| | | JP 5680225 B2 | 04-03-2015 |
| | | JP WO2013105264 A1 | 11-05-2015 |
| | | KR 20140103159 A | 25-08-2014 |
| | | US 2015006240 A1 | 01-01-2015 |
| | | WO 2013105264 A1 | 18-07-2013 |
| WO 2020222392 A1 | 05-11-2020 | NONE | |

EPO FORM P0459

For more details about this annex : see Official Journal of the European Patent Office, No. 12/82

**REFERENCES CITED IN THE DESCRIPTION**

**Non-patent literature cited in the description**

- **JUSTINAS MISEIKIS.** Multi 3D camera mapping for predictive and reflexive robot manipulator trajectory estimation. *IEEE Symposium Series on Computational Intelligence (SSCI),* 2016